# EUROPEAN PATENT SPECIFICATION

(11) **EP 4 417 033 B1**
(45) Date of publication and mention of the grant of the patent: **20.08.2025**
(21) Application number: 24157989.5
(22) Date of filing: 16.02.2024
(51) Int. Cl.: A01D 34/00, A01D 43/10, A01D 34/66

(54) **MOWER IMPLEMENT WITH BLADE MONITORING SYSTEM**
MÄHER MIT MESSERÜBERWACHUNGSSYSTEM
OUTIL DE TONDEUSE AVEC SYSTÈME DE SURVEILLANCE DE LAME

(30) Priority: 20.02.2023 US 202318171410
(43) Date of publication of application: 21.08.2024
(73) Proprietor: Deere & Company, Moline, IL 61265 (US)
(72) Inventor: SOMAROWTHU, Mahesh, 68163 Mannheim (DE); RASTE, Hrishikesh Yashwantguru, 68163 Mannheim (DE); VADNERE, Mohan A, 68163 Mannheim (DE); RANE, Vishal V, 68163 Mannheim (DE)
(74) Representative: Stein, Stefan

(56) References cited:
- CA-A1- 3 081 984
- US-A1- 2019 313 576
- US-A1- 2021 267 121
- US-A1- 2022 151 139
- ANONYMOUS: "Convolutional neural network - Wikipedia", 29 July 2019 (2019-07-29), XP055735969, Retrieved from the Internet <URL:https://en.wikipedia.org/w/index.php?title=Convolutional_neural_network&oldid=908472838#Image_recognition> [retrieved on 20201001]

## Description

### TECHNICAL FIELD

The disclosure generally relates to a mower implement having a blade monitoring system for determining the sharpness of a blade.

### BACKGROUND

A mower implement includes a cutter having a blade for cutting standing crop material. In many implementations, the blade rotated about a generally vertical axis to cut the standing crop material. However, in other implementations, the blade may move in a back-and-forth reciprocal motion to cut the standing crop material. The mower implement is moved across a ground surface, whereby the blade engages and cuts the standing crop material, severing an upper portion of the standing crop material from a lower portion of the standing crop material. The lower portion of the crop material disposed nearest the ground surface remains standing and may be referred to as the crop stubble. When a cutting edge of the blade is sharp, the blade cleanly cuts the crop material creating a clean, straight cut end on both the crop stubble and the upper portion of the crop that was severed from the lower portion. When the cutting edge of the blade is dull, i.e., not sharp, the blade tends to tear the crop material creating a jagged, uneven cut end on both the crop stubble and the upper portion of the crop that was severed from the lower portion. Accordingly, the cut end of the crop stubble may be examined for indications of the sharpness of the cutting edge of the blade.

It is desirable to maintain a sharp cutting edge of the blade to achieve a sharp cut. When the cut crop material is to be used as feed for animals, the sharp cut improves digestion in the animals. Additionally, a cut end that is torn, such as occurs with a dull cutting edge on the blade, may increase the susceptibility of the plant to disease, may slow future growth, and may lead to lesser yield and/or loss of nutritional value. Accordingly, it is desirable to maintain a sharp cutting edge on the blade to achieve a high level of digestibility for the feed as well as maintain a high growth rate and nutritional value in future growth of the crop material. US 2019/313576 A1 discloses a work machine comprising a control device including: an image acquiring section that acquires image data of an image of a work target of the work machine; a feature recognizing section that recognizes a feature about an appearance of the work target after work, based on the image data acquired by the image acquiring section; and a control parameter deciding section that decides a parameter for controlling work of the work machine, based on the feature recognized by the feature recognizing section.

### SUMMARY

A mower implement is provided. The mower implement includes a frame that is moveable across a ground surface in a direction of travel during operation. A cutter is coupled to the frame. The cutter includes a blade operable to cut crop material as the frame moves across the ground surface. An image sensor is coupled to the frame. The image sensor is positioned to capture an image of cut crop stubble rearward of the cutter relative to the direction of travel during operation. The mower implement further includes a blade diagnostic controller including a processor and a memory having a diagnostic algorithm stored therein. The processor of the blade diagnostic controller is operable to execute the diagnostic algorithm to capture an image of the cut crop stubble rearward of the cutter with the image sensor as the frame moves across the ground surface. The blade diagnostic controller identifies a cut end of the cut crop stubble in the image, determine a cut quality of the cut end of the cut crop stubble, and correlate the cut quality of the cut end to a blade sharpness index. The blade diagnostic controller then communicates an index signal to a communicator. The index signal controls the communicator to generate a communication indicating the blade sharpness index.

In one aspect of the disclosure, the processor is operable to execute the diagnostic algorithm to automatically communicate a maintenance request signal to the communicator when the blade sharpness index is below a sharpness threshold. The maintenance request signal controls the communicator to generate a communication requesting maintenance for the blade. Accordingly, when the sharpness index drops below the sharpness threshold, the blade diagnostic controller may automatically request maintenance for the blade, such as but not limited to sharpening a cutting edge of the blade, rotating the blade to expose a different cutting edge or replacing the blade.

In one aspect of the disclosure, the processor is operable to execute the diagnostic algorithm to estimate a remaining life of the blade based on the blade sharpness index. The blade diagnostic controller may then communicate a life expectancy signal to the communicator. The life expectancy signal controls the communicator to generate a communication indicating the remaining life of the blade. As such, an operator of the mower implement and/or a service manager of the mower implement may confidently plan usage and operation of the mower implement, such as scheduling the mower implement for a work interval based on the remaining life of the blade and/or scheduling maintenance for the blade.

According to the invention, the processor is operable to execute the diagnostic algorithm to identify the cut end of the cut crop stubble in the image via pattern matching and recognition using a convolutional neural network. The convolutional neural network is operable to classify the cut end of the cut crop stubble as one of a sharp cut end and a dull cut end.

The blade diagnostic controller then calculates a frequency of dull cut ends of the cut crop stubble. The frequency of dull cut ends may include, for example, a percentage of the identified cut ends that are classified as dull cut ends. The frequency of the dull cut ends may be calculated over a period of time from a plurality of different images, thereby enabling the blade diagnostic controller to track the condition of the blade over time and the change of the sharpness of the blade over time.

The processor is operable to execute the diagnostic algorithm to determine the cut quality based on the frequency of dull cut ends of the cut crop stubble. For example, the blade diagnostic controller may include a model, e.g., a blade sharpness index model, saved on the memory of the blade diagnostic controller. The processor may be configured to execute the diagnostic algorithm to use the blade sharpness index model to determine the cut quality of the cut end of the cut crop stubble by using the frequency of dull cut ends as an input of the model, which in turn outputs the cut quality. In addition to the frequency of dull cut ends, the blade sharpness index model may further use one or more inputs, such as but not limited to a moisture content of the crop material and/or a speed of the blade to better refine the model and more accurately predict and/or determine the cut quality.

In one implementation of the disclosure, the processor may be operable to execute the diagnostic algorithm to determine the cut quality of the cut end of the cut crop stubble by measuring light diffraction from the cut end of the cut crop stubble. When light diffraction from the cut end is above a diffraction threshold, the cut end may be classified as a dull cut end. When light diffraction from the cut end is below the diffraction threshold, the cut end may be classified as a sharp cut end.

A method of monitoring a blade of a mower implement is also provided. The method includes capturing an image of cut crop stubble rearward of the cutter with an image sensor mounted to the mower implement as the mower implement moves across a ground surface. A cut end of the cut crop stubble is identified in the image with a blade diagnostic controller using a convolutional neural network. A cut quality of the cut end of the cut crop stubble is determined with the blade diagnostic controller using the convolutional neural network. The blade diagnostic controller then correlates the cut quality of the cut end to a blade sharpness index, and communicate an index signal to a communicator. The index signal controls the communicator to generate a communication indicating the blade sharpness index.

In one aspect of the disclosure, the method of monitoring the blade includes the blade diagnostic controller automatically communicating a maintenance request signal to the communicator when the blade sharpness index is below a sharpness threshold. The maintenance request signal controls the communicator to generate a communication requesting maintenance for the blade.

In one aspect of the disclosure, the method of monitoring the blade includes the blade diagnostic controller automatically estimating a remaining life of the blade based on the blade sharpness index and communicating a life expectancy signal to the communicator. The life expectancy signal controls the communicator to generate a communication indicating the remaining life of the blade.

The above features and advantages and other features and advantages of the present teachings are readily apparent from the following detailed description of the best modes for carrying out the teachings when taken in connection with the accompanying drawings.

### BRIEF DESCRIPTION OF THE DRAWINGS

FIG. 1 is a schematic perspective view of a tractor and mower implement.
FIG. 2 is a schematic perspective view of the mower implement.
FIG. 3 is a schematic exploded perspective view of the mower implement.
FIG. 4 is a schematic side view of the mower implement showing an image sensor capturing an image of cut crop stubble.
FIG. 5 is a schematic side view of cut crop stubble exhibiting a sharp cut end.
FIG. 6 is a schematic side view of cut crop stubble exhibiting a dull cut end.
FIG. 7 is a flow chart representing a method of monitoring a status of a blade of the mower implement.
FIG. 8 is a schematic representation of an image showing cut ends of the crop stubble classified as sharp cut ends and cut ends of the crop stubble classified as dull cut ends.

### DETAILED DESCRIPTION

Those having ordinary skill in the art will recognize that terms such as "above," "below," "upward," "downward," "top," "bottom," etc., are used descriptively for the figures, and do not represent limitations on the scope of the disclosure, as defined by the appended claims. Furthermore, the teachings may be described herein in terms of functional and/or logical block components and/or various processing steps. It should be realized that such block components may be comprised of any number of hardware, software, and/or firmware components configured to perform the specified functions.

Terms of degree, such as "generally", "substantially" or "approximately" are understood by those of ordinary skill to refer to reasonable ranges outside of a given value or orientation, for example, general tolerances or positional relationships associated with manufacturing, assembly, and use of the described embodiments.

As used herein, "e.g." is utilized to non-exhaustively list examples, and carries the same meaning as alternative illustrative phrases such as "including," "including, but not limited to," and "including without limitation." As used herein, unless otherwise limited or modified, lists with elements that are separated by conjunctive terms (e.g., "and") and that are also preceded by the phrase "one or more of," "at least one of," "at least," or a like phrase, indicate configurations or arrangements that potentially include individual elements of the list, or any combination thereof. For example, "at least one of A, B, and C" and "one or more of A, B, and C" each indicate the possibility of only A, only B, only C, or any combination of two or more of A, B, and C (A and B; A and C; B and C; or A, B, and C). As used herein, the singular forms "a", "an" and "the" are intended to include the plural forms as well, unless the context clearly indicates otherwise. Further, "comprises," "includes," and like phrases are intended to specify the presence of stated features, steps, operations, elements, and/or components, but do not preclude the presence or addition of one or more other features, steps, operations, elements, components, and/or groups thereof.

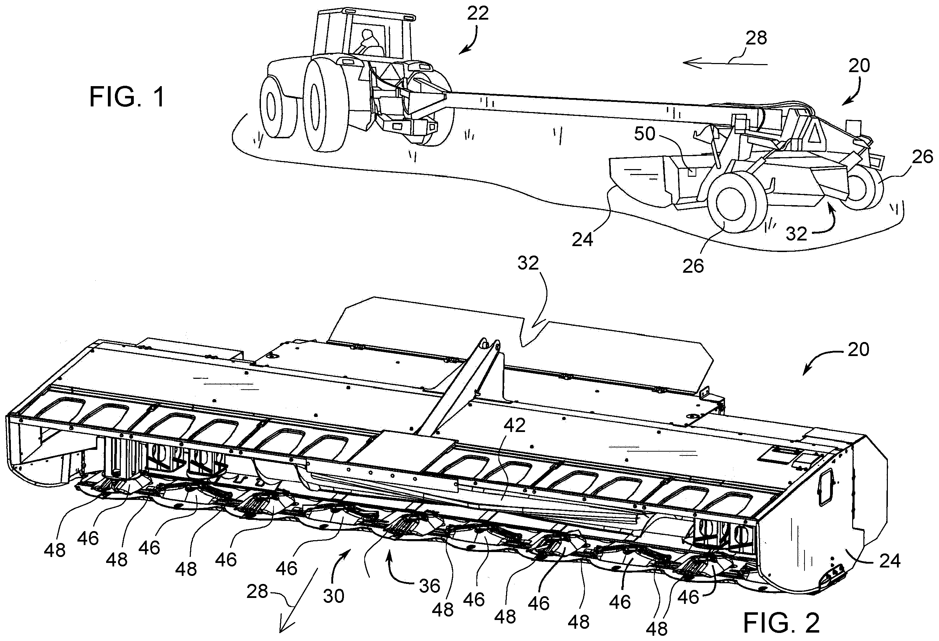

Referring to the Figures, wherein like numerals indicate corresponding parts throughout the several views, a mower implement 20 is generally shown embodied as a drawn mower-conditioner implement in FIG. 1. Referring to FIG. 1 the example implementation of the mower implement 20 is shown being drawn by a traction unit 22, e.g., a tractor. The mower implement 20 may be pulled by the traction unit 22 to mow and/or condition crops or grasses. In other implementations, the mower implement 20 may be pushed by the traction unit 22 to mow and/or condition crops or grasses. In yet other implementations, the mower implement 20 and the traction unit 22 may be combined as a self-propelled mower implement 20, e.g., a self-propelled windrower.

Referring to FIG. 1, the implementation of the mower implement 20 includes a frame 24. One or more ground engaging elements 26 may be coupled to the frame 24 and may be moveable relative to the frame 24 to move and/or guide the frame 24 across a ground surface in a direction of travel 28 during operation. The ground engaging elements 26 may include, but are not limited to tires, tracks, skies, etc.

Referring to FIGS. 2-3, the frame 24 forms a work area. The work area includes a forwardly located inlet zone 30, and a rearwardly located discharge zone 32. The frame includes a right-side transverse rear wall and a left-side transverse rear wall that extend inwardly from a right-side outer wall and a left-side outer wall, respectively. The right-side transverse rear wall and the left-side transverse rear wall terminate approximately at the ends of a crop conditioning system 34. The example implementation of the crop conditioning system 34 is attached to the frame 24, and includes an upper conditioner roll 38 and a lower conditioner roll 40. The crop conditioning system 34 is positioned to receive crop material therebetween from a cutter 36, described in greater detail below.

The upper conditioner roll 38 and the lower conditioner roll 40, which generally define the width of the material discharge zone 32, are located centrally in the mower implement 20. It is to be understood that the locations of the material inlet zone 30 and the material discharge zone 32 are not critical to the teachings of this disclosure, and that implements having material inlet zones 30 and material discharge zones 32 which are not centered relative to the implement would benefit from the teachings of the present disclosure. Moreover, various other types of crop conditioning systems 34 may be used instead of or in addition to the crop conditioning system 34 shown in the Figures and described herein. Such other crop conditioning systems 34 may include, but are not limited to, flail/impeller conditioners, and the like.

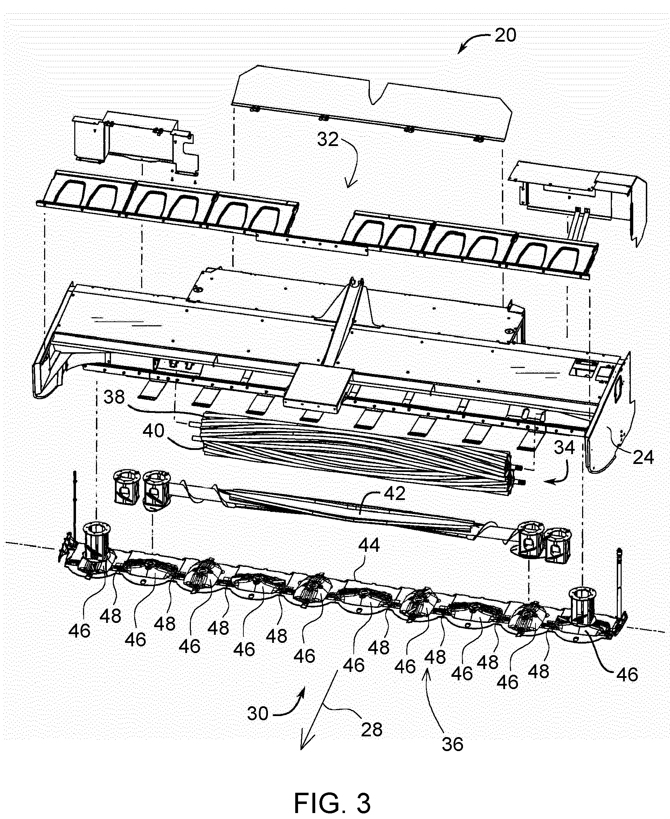

Referring to FIG. 3, a rotatably mounted auger 42 extends between the right-side outer wall and the left-side outer wall, and passes in front of the crop conditioning system 34. In particular, the auger 42 is positioned in front of the lower conditioner roll 40 with a central axis of the auger 42 laterally spaced apart from, and lower than a central axis of the lower conditioner roll 40. The auger 42 includes a central cylindrical drum with a central portion and outer ends. The outer ends of the auger 42 include flighting, and a plurality of fins is attached to the central portion. In operation, the design of the auger 42 enables the delivery of cut crop material into a nip or gap area of the crop conditioning system 34, with the auger 42 and lower conditioner roll 40 co-rotated in the same rotational direction, and with the auger 42 and the upper conditioner roll 38 counter-rotated in opposite rotational directions.

Referring to FIGS. 2-3, the cutter 36 is supported by the frame 24, between the inlet zone 30 and the discharge zone 32. The cutter 36 includes a cutter bar 44 that extends along an axis that is disposed generally transverse to the direction of travel 28 of the implement. The cutter bar 44 extends between the right-side outer wall and the left-side outer wall, and is located just forward of the crop conditioning system 34. While the present disclosure could be advantageously applied to rotary cutter bars 44 of various constructions, the cutter bar 44 of the exemplary embodiment is a known type containing a plurality of intermeshed spur gears including a plurality of idler gears meshed with each other and arranged in transverse alignment over the length of the cutter bar 44, with selected ones of the idler gears being meshed with drive gears respectively associated, one each, with a plurality of cutting discs 46 spaced along the cutter bar 44.

As best shown in FIG. 3, the cutter bar 44 includes a plurality of spaced apart blade-carrying rotary cutting discs 46 disposed in the work area for rotation about respective vertical axes. The cutting discs 46 are located forward of the crop conditioning system 34. Each of the cutting discs 46 is coupled to an upright drive shaft to which power is coupled for causing them to rotate in appropriate directions, for delivering cut crop material to the crop conditioning system 34. Each respective rotary cutting disc 46 includes at least one blade 48 coupled to the disc proximate an outer peripheral edge of the rotary cutting disc 46. The blade 48 is rotatable with the rotary cutting disc 46 and is operable to cut crop material while rotating with the frame 24 moving across the ground surface. In the example implementation shown in the Figures and described herein, each respective one of the rotary cutting discs 46 includes two diametrically opposed blades 48. However, the number of blades 48 per rotary cutting disc 46 may vary from the example implementation.

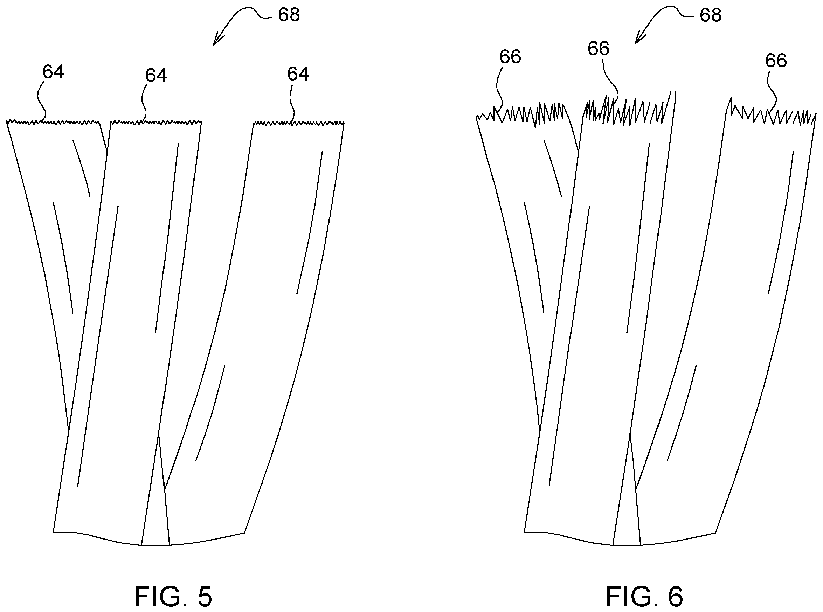

Referring to FIG. 5, when sharp, the blades 48 cut the crop material, leaving a clean, generally straight cut end. It should be appreciated that both the crop stubble and the severed upper end of the cut crop material may exhibit a respective sharp cut end when cut with a sharp blade 48. As used herein, the term "crop stubble" is defined as the basal part of herbaceous plants and especially cereal grasses remaining attached to the soil after harvest. Referring to FIG. 6, when dull, the blades 48 tend to tear the crop material instead of cut the crop material, leaving a jagged, torn and uneven end. It should be appreciated that both the crop stubble and the severed upper end of the cut crop material may exhibit a respective jagged end when cut with a dull blade 48.

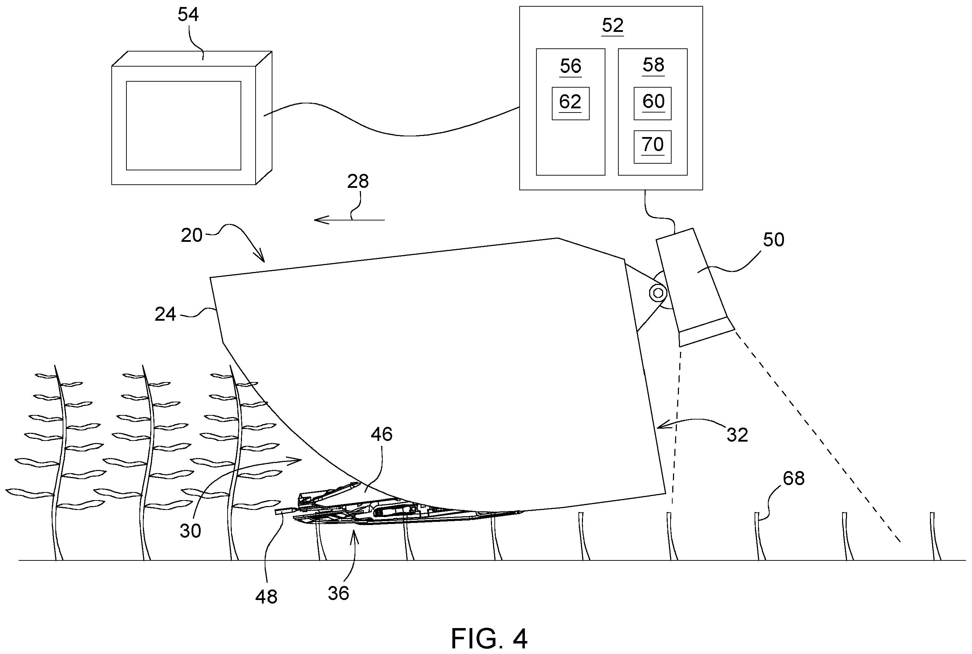

Referring to FIG. 4, the mower implement 20 may further include an image sensor 50. The image sensor 50 may be coupled to the frame 24 and positioned to capture an image of cut crop rearward of the cutter 36 relative to the direction of travel 28 during operation. The image sensor 50 may include, but is not limited to, a camera, a high speed video camera, an infra-red camera, or some other device capable of capturing an image of the cut crop material and saving and/or communicating the captured image as an electronic data file or electronic sensor signal. The image sensor 50 may be positioned to capture the image of the cut crop stubble, and/or the upper ends of the cut crop material, i.e., the harvested crop. The image sensor 50 is positioned to capture the image of the cut crop rearward of the mower implement 20.

As shown in FIG. 4, the mower implement 20 further includes a blade diagnostic controller 52. The blade diagnostic controller 52 is disposed in communication with at least the image sensor 50 and a communicator 54, e.g., an audio and/or visual communication device. The blade diagnostic controller 52 is operable to receive image signals from the image sensor 50, and communicate a signal to the communicator 54. While the blade diagnostic controller 52 is generally described herein as a singular device, it should be appreciated that the blade diagnostic controller 52 may include multiple devices linked together to share and/or communicate information therebetween. Furthermore, it should be appreciated that the blade diagnostic controller 52 may be located on the mower implement or located remotely from the mower implement, such as but not limited to being located on the associated traction unit 22.

The blade diagnostic controller 52 may alternatively be referred to as a computing device, a computer, a controller, a control unit, a control module, a module, etc. The blade diagnostic controller 52 includes a processor 56, a memory 58, and all software, hardware, algorithms, connections, sensors, etc., necessary to manage and control the operation of the image sensor 50 and the communicator 54. As such, a method may be embodied as a program or algorithm operable on the blade diagnostic controller 52. It should be appreciated that the blade diagnostic controller 52 may include any device capable of analyzing data from various sensors, comparing data, making decisions, and executing the required tasks.

As used herein, "blade diagnostic controller 52" is intended to be used consistent with how the term is used by a person of skill in the art, and refers to a computing component with processing, memory, and communication capabilities, which is utilized to execute instructions (i.e., stored on the memory 58 or received via the communication capabilities) to control or communicate with one or more other components. In certain embodiments, the blade diagnostic controller 52 may be configured to receive input signals in various formats (e.g., hydraulic signals, voltage signals, current signals, CAN messages, optical signals, radio signals), and to output command or communication signals in various formats (e.g., hydraulic signals, voltage signals, current signals, CAN messages, optical signals, radio signals).

The blade diagnostic controller 52 may be in communication with other components on the mower implement 20 and/or traction unit 22, such as hydraulic components, electrical components, and operator inputs within an operator station of the associated traction unit 22. The blade diagnostic controller 52 may be electrically connected to these other components by a wiring harness such that messages, commands, and electrical power may be transmitted between the blade diagnostic controller 52 and the other components. Although the blade diagnostic controller 52 is referenced in the singular, in alternative embodiments the configuration and functionality described herein can be split across multiple devices using techniques known to a person of ordinary skill in the art.

The blade diagnostic controller 52 may be embodied as one or multiple digital computers or host machines each having one or more processors, read only memory (ROM), random access memory (RAM), electrically-programmable read only memory (EPROM), optical drives, magnetic drives, etc., a high-speed clock, analog-to-digital (A/D) circuitry, digital-to-analog (D/A) circuitry, and any required input/output (I/O) circuitry, I/O devices, and communication interfaces, as well as signal conditioning and buffer electronics.

The computer-readable memory 58 may include any non-transitory/tangible medium which participates in providing data or computer-readable instructions. The memory 58 may be non-volatile or volatile. Non-volatile media may include, for example, optical or magnetic disks and other persistent memory. Example volatile media may include dynamic random access memory (DRAM), which may constitute a main memory. Other examples of embodiments for memory 58 include a floppy, flexible disk, or hard disk, magnetic tape or other magnetic medium, a CD-ROM, DVD, and/or any other optical medium, as well as other possible memory devices such as flash memory.

The blade diagnostic controller 52 includes the tangible, non-transitory memory 58 on which are recorded computer-executable instructions, including a diagnostic algorithm 60. The processor 56 of the blade diagnostic controller 52 is configured for executing the diagnostic algorithm 60. The diagnostic algorithm 60 implements a method of monitoring the status and/or sharpness of the blade 48 of the mower implement 20, described in detail below.

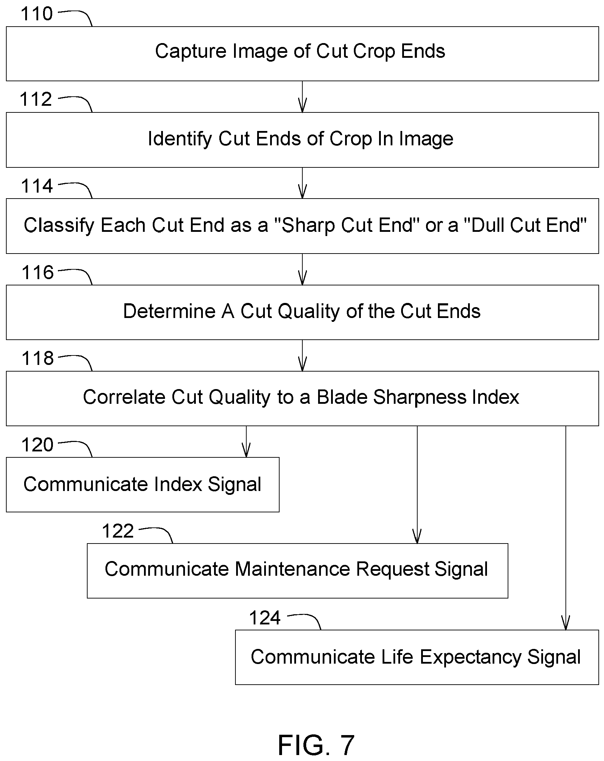

Referring to FIG. 7, the process described herein includes capturing an image of the cut crop rearward of the cutter 36 with the image sensor 50 as the frame 24 moves across the ground surface. The step of capturing the image of the cut crop is generally indicated by box 110 shown in FIG. 7. The image may include the cut crop stubble 68 and/or the upper ends of the cut crop material. In the example implementation described herein, the image sensor 50 is positioned to capture the image of the cut crop stubble 68 rearward of the cutter 36 as the mower implement 20 moves across the ground surface. However, in other implementations, it should be appreciated that the image sensor 50 may be positioned to capture the image of a swath or windrow formed by and behind the mower implement 20 including the upper or harvested cut ends of the cut crop material.

The blade diagnostic controller 52 controls the image sensor 50 to capture the image of the crop stubble 68 immediately rearward of the mower implement 20. The image sensor 50 communicates a sensor signal including the captured image to the blade diagnostic controller 52. The blade diagnostic controller 52 then analyzes the captured image of the crop stubble 68 to identify a cut end of the cut crop stubble 68 in the image. The step of identifying the cut ends of the crop in the image are generally indicated by box 112 shown in FIG. 7. It should be appreciated that the captured image may include several different cut ends 64, 66 of the crop stubble 68. As such, the blade diagnostic controller 52 may identify multiple cut ends 64, 66 of the cut crop stubble 68 in the captured image.

The blade diagnostic controller 52 identifies the cut end of the cut crop stubble 68 via pattern matching and recognition using a convolutional neural network 62. As is understood by those skilled in the art, pattern recognition is the process of recognizing patterns by using a machine learning algorithm. Pattern recognition can be defined as the classification of data based on knowledge already gained or on statistical information extracted from patterns and/or their representation. Pattern recognition involves the identification of an unknown object, the comparison of that unknown object to many different known learned object images, whereby the known object image most closely resembling the unknown object may be used to identify the unknown object. The unknown object may then be classified based on this correlation and determination. As understood by those skilled in the art, convolutional neural network 62s are a specialized type of artificial neural networks that use a mathematical operation called convolution in place of general matrix multiplication in at least one of their layers. They are specifically designed to process pixel data and are used in image recognition and processing. The specific features, functions, and operations of the Convolutional neural network 62 and image pattern recognition and classification operations performed thereby are understood by those skilled in the art, and are therefore not described in greater detail herein.

The blade diagnostic controller 52 uses the convolutional neural network 62 and pattern recognition and classification operations to classify the cut ends 64, 66 of the cut crop stubble 68 identified in the image as one of a sharp cut end 64 and a dull cut end 66. The step of classifying the cut ends as sharp cut ends 64 or dull cut ends 66 is generally indicated by box 114 shown in FIG. 7. The sharp cut end 64 is characterized by a generally clean even cut through the stalk of the crop material, whereas the dull cut end 66 is characterized by a generally ragged or torn cut through the stalk of the crop material. It should be appreciated that the blade diagnostic controller 52 classifies each respective one of a plurality of different cut ends 64, 66 identified in the image as either a dull cut end 66 or a sharp cut end 64.

The blade diagnostic controller 52 then determines a cut quality of the cut ends 64, 66 of the cut crop stubble 68. The step of determining the cut quality of the cut ends 64, 66 is generally indicated by box 116 shown in FIG. 7. The blade diagnostic controller determines the cut quality based on a frequency of dull cut ends 66 of the cut crop stubble 68. The frequency of the dull cut ends 66 may be represented as a percentage or ratio of the total number of cut ends 64, 66 classified as a dull cut end 66 relative to a total number of classified cut ends 64, 66, i.e., sum of the total number of cut ends 64, 66 classified as a dull cut end 66 and the total number of cut ends 64, 66 classified as a sharp cut end 64.

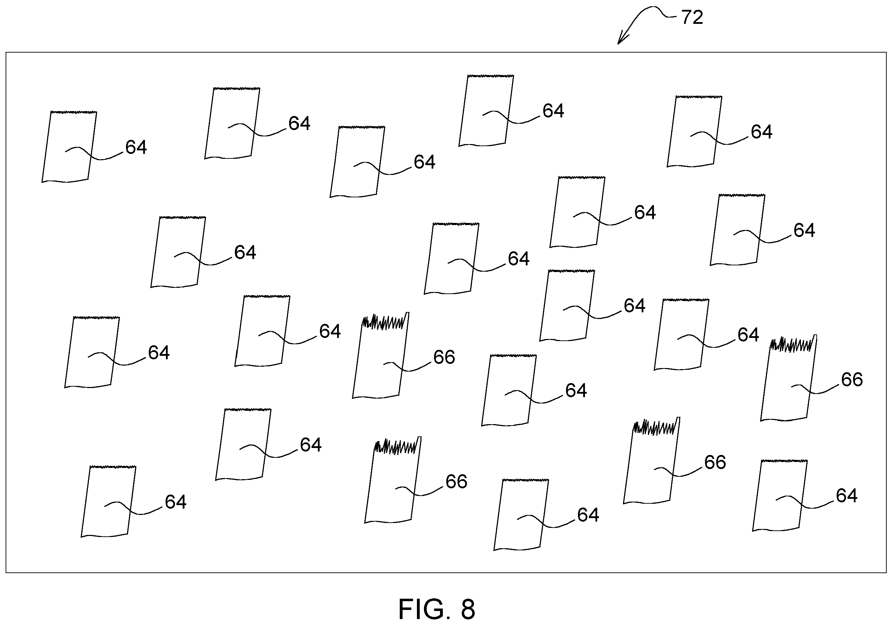

The blade diagnostic controller 52 then calculates a frequency of dull cut ends 66 of the cut crop stubble 68. For example, referring to FIG. 8, an image of the cut crop stubble is generally shown at 72. If the blade diagnostic controller 52 identifies a total number of twenty two (22) cut ends 64, 66 in the respective image 72, and classifies eighteen (18) of the total identified cut ends 64, 66 as sharp cut ends 64, i.e., a total of eighteen (18) sharp cut ends 64, and classifies four (4) of the total identified cut ends 64, 66 as dull cut ends 66, i.e., a total of four (4) dull cut ends 66, then the blade diagnostic controller 52 may determine the frequency of dull cut ends 66 of the crop stubble 68 in that image by dividing the total number of identified dull cut ends 66, i.e., four (4) dull cut ends 66 identified in the image, by the total number of identified cut ends 64, 66 in the image, i.e., twenty two (22) total cut ends 64, 66 identified in the image, to calculate a frequency of dull cut ends 66 of twenty three point five percent (23.5 %). It should be appreciated that the frequency of dull cut ends 66 identified in the image may be calculated and expressed in some other manner than described herein.

The blade diagnostic controller 52 may calculate the frequency of dull cut ends 66 of the cut crop stubble 68 in each respective image. Additionally, it should be appreciated that the blade diagnostic controller 52 may capture a plurality of images over a period of time. The blade diagnostic controller 52 may calculate the frequency of dull cut ends 66 of the crop stubble 68 over the period of time from the plurality of images. By so doing, the frequency of dull cut ends 66 may be tracked over a period of time, and as such, the change in the frequency of dull cut ends 66 may be tracked over that period of time. It should be appreciated that the frequency of the dull cut ends 66 may be calculated from a plurality of images over a period of time by aggregating the total number of identified cut ends 64, 66 in all of the images, and aggregating the total number of the identified cut ends 64, 66 classified as dull cut ends 66 in all of the images.

The blade diagnostic controller 52 determines the cut quality based only on the frequency of dull cut ends 66 of the cut crop stubble 68. In other implementations, the blade diagnostic controller 52 may determine the cut quality based on the frequency of dull cut ends 66 of the cut crop stubble 68 along with other factors affecting cut quality. For example, the blade diagnostic controller 52 may include as inputs into a blade sharpness index model saved on the memory 58 of the blade diagnostic controller 52, the frequency of the dull cut ends 66 of the cut crop stubble 68, a moisture content of the crop material and a speed of the blade 48. Using these factors as inputs into the blade sharpness index model, the blade diagnostic controller 52 may determine the cut quality of the cut ends 64, 66. It should be appreciated that the blade sharpness index model may include other factors as inputs, and may output the cut quality. The cut quality may be expressed as a number, a grade, a ration, or some other form of expressing the quality of the cut performed on the crop material.

In another implementation, the blade diagnostic controller 52 may determine the cut quality of the cut ends 64, 66 of the cut crop stubble 68 by measuring light diffraction from the cut end of the cut crop stubble 68. Light will diffract from the cut ends 64, 66 of the crop stubble 68 at different angles depending upon the number and shape of the edges formed in the crop stubble 68. The higher the number of edges on the cut end of the cut crop stubble 68, the higher the amount of light diffraction. It should be appreciated that a dull cut end 66, being more ragged and torn than a clean smooth cut end, will exhibit a greater number of edges and have a higher degree of light diffraction than will a sharp cut end 64. As such, light diffraction from the cut end above a diffraction threshold may be classified as a dull cut end 66, whereas light diffraction from the cut end below the diffraction threshold may be classified as a sharp cut end 64. It should be appreciated that the image captured of the cut crop stubble 68 may capture the light diffraction from the cut crop stubble 68, thereby allowing the blade diagnostic controller 52 to analyze the image to determine the degree of light diffraction in the image, and thereby determine the cut quality of the cut ends 64, 66 of the cut crop stubble 68. It should be appreciated that the cut quality of the cut ends 64, 66 may be determined in some other manner not described herein.

Once the cut quality of the cut ends 64, 66 of the cut crop stubble 68 has been determined, the blade diagnostic controller 52 then correlates the cut quality of the cut ends 64, 66 to a blade sharpness index. The step of correlating the cut quality of the cut ends 64, 66 to a blade sharpness index is generally indicated by box 118 shown in FIG. 7. The blade sharpness index may be expressed in a suitable manner, such as but not limited to, a number within a numeric range, a binary grade, e.g., good or bad, a color associated with a color spectrum between good and bad etc. In one implementation, the blade sharpness index may include a word descriptor selected from a few options, such as new, good, medium, poor, and dull. The blade diagnostic controller 52 may use the quality of the cut ends 64, 66 as an input into a reference table 70 which generates and/or correlates the quality of the cut ends 64, 66 into the blade sharpness index.

Once the blade diagnostic controller 52 has determined the blade sharpness index, the blade diagnostic controller 52 then communicates an index signal to the communicator 54. The step of communicating the index signal to the communicator 54 is generally indicated by box 120 shown in FIG. 7. The communicator 54 may include any device capable of communicating a message to a machine or an operator. For example, the communicator 54 may include, but is not limited to, a touch screen display, an audio speaker, a light emitter, a radio transmitter, a cellular device, etc. The index signal controls the communicator 54 to generate a communication indicating the blade sharpness index. In one implementation, the communicator 54 may be configured as a touch screen display disposed in a work station of the associated traction unit. The index signal may command the touch screen display to generate a signal indicating the blade sharpness index to the operator of the traction unit 22. In other implementations, the communicator 54 may include a wireless network transmitter operable to generate a wireless signal through the Cloud network to generate the blade sharpness index on a screen of a computing device located at a remote location, e.g., a fleet management service location.

In one aspect of the disclosure, the blade diagnostic controller 52 may be configured to automatically communicate a maintenance request signal to the communicator 54 when the blade sharpness index is below a sharpness threshold. The step of communicating the maintenance request to the communicator 54 is generally indicated by box 122 shown in FIG. 7. The sharpness threshold may be defined as a level of the blade sharpness index indicating that the blade 48 is dull and requires replacement, and/or that the cut quality from the blade 48 is no longer acceptable and/or will soon become unacceptable. The maintenance request signal controls the communicator 54 to generate a communication requesting maintenance for the blade 48. Maintenance may include, but is not limited to, sharpening and/or replacement.

In one aspect of the disclosure, the blade diagnostic controller 52 may be configured to estimate a remaining life of the blade 48 based on the blade sharpness index. Through testing, the remaining life of the blade 48 may be correlated to the blade sharpness index. The remaining life of the blade 48 may be based on and/or adjusted bases on certain parameters, such as but not limited to type of crop material being cut, soil type, moisture content, etc. The blade diagnostic controller 52 may consider these other factors when determining the remaining life of the blade 48. The remaining life of the blade 48 may be expressed, for example but not limited to, hours of operation for a given set of conditions. The blade diagnostic controller 52 may then communicate a life expectancy signal to the communicator 54. The step of communicating the life expectancy signal to the communicator 54 is generally indicated by box 124 shown in FIG. 7. The life expectancy signal controls the communicator 54 to generate a communication indicating the remaining life of the blade 48. Such an estimation enables the operator to schedule maintenance for the blade 48 in the future, thereby preventing unscheduled machine downtime.

The detailed description and the drawings or figures are supportive and descriptive of the disclosure, but the scope of the disclosure is defined solely by the claims. While some of the best modes and other embodiments for carrying out the claimed teachings have been described in detail, various alternative designs and embodiments exist for practicing the disclosure defined in the appended claims.

## Claims

1. A mower implement (20) comprising:
a frame (24) moveable across a ground surface in a direction of travel (28) during operation;
a cutter (36) coupled to the frame (24) and including a blade (48) operable to cut crop material as the frame (24) moves across the ground surface;
an image sensor (50) coupled to the frame (24) and positioned to capture an image of cut crop rearward of the cutter (36) relative to the direction of travel (28) during operation;
a blade diagnostic controller (52) including a processor (56) and a memory (58) having a diagnostic algorithm (60) stored therein, wherein the processor (56) is configured to execute the diagnostic algorithm (60) to:
capture an image of the cut crop rearward of the cutter (36) with the image sensor (50) as the frame (24) moves across the ground surface;
identify the cut end (64, 66) of the cut crop in the image via pattern matching and recognition using a convolutional neural network (62), wherein the convolutional neural network (62) is configured to classify the cut end (64, 66) of the cut crop as one of a sharp cut end (64) and a dull cut end (66);
determine a cut quality of the cut end (64, 66) of the cut crop;
calculate a frequency of dull cut ends (66) of the cut crop;
determine the cut quality based on the frequency of dull cut ends (66) of the cut crop;correlate the cut quality of the cut end (64, 66) to a blade sharpness index; and
communicate an index signal to a communicator (54), wherein the index signal controls the communicator (54) to generate a communication indicating the blade sharpness index.

2. The mower implement (20) set forth in claim 1, wherein the processor (56) is configured to execute the diagnostic algorithm (60) to automatically communicate a maintenance request signal to the communicator (54) when the blade sharpness index is below a sharpness threshold, wherein the maintenance request signal controls the communicator (54) to generate a communication requesting maintenance for the blade (48).

3. The mower implement (20) set forth in claim 1 or 2, wherein the processor (56) is configured to execute the diagnostic algorithm (60) to estimate a remaining life of the blade (48) based on the blade sharpness index.

4. The mower implement (20) according to at least one of the preceding claims, wherein the processor (56) is configured to execute the diagnostic algorithm (60) to communicate a life expectancy signal to the communicator (54), wherein the life expectancy signal controls the communicator (54) to generate a communication indicating the remaining life of the blade (48).

5. The mower implement (20) according to at least one of the preceding claims, wherein the processor (56) is configured to execute the diagnostic algorithm (60) to determine the cut quality of the cut end (64, 66) of the cut crop by measuring light diffraction from the cut end (64, 66) of the cut crop, wherein light diffraction from the cut end (64, 66) above a diffraction threshold is classified as a dull cut end (66) and light diffraction from the cut end (64, 66) below the diffraction threshold is classified as a sharp cut end (64).

6. A method of monitoring a blade (48) of a mower implement (20), the method comprising:
capturing an image of cut crop stubble rearward of the cutter (36) with an image sensor (50) mounted to the mower implement (20) as the mower implement (20) moves across a ground surface;
identifying a cut end (64, 66) of the cut crop stubble in the image with a blade diagnostic controller (52) using a convolutional neural network (62), wherein the convolutional neural network (62) classifies the cut end (64, 66) of the cut crop as one of a sharp cut end (64) and a dull cut end (66);;
determining a cut quality of the cut end (64, 66) of the cut crop stubble with the blade diagnostic controller (52) using the convolutional neural network (62);
calculating a frequency of dull cut ends (66) of the cut crop;
determining the cut quality based on the frequency of dull cut ends (66) of the cut crop;
correlating the cut quality of the cut end (64, 66) to a blade sharpness index with the blade diagnostic controller (52); and
communicating an index signal to a communicator (54), wherein the index signal controls the communicator (54) to generate a communication indicating the blade sharpness index.

7. The method set forth in claim 6, further comprising communicating a maintenance request signal to the communicator (54) when the blade sharpness index is below a sharpness threshold, wherein the maintenance request signal controls the communicator (54) to generate a communication requesting maintenance for the blade (48).

8. The method set forth in claim 6 or 7, further comprising estimating a remaining life of the blade (48) based on the blade sharpness index and communicating a life expectancy signal to the communicator (54), wherein the life expectancy signal controls the communicator (54) to generate a communication indicating the remaining life of the blade (48).

## Patentansprüche

1. Mähwerkzeug (20), das Folgendes umfasst:
einen Rahmen (24), der während des Betriebs in einer Fahrtrichtung (28) über eine Bodenoberfläche bewegt werden kann;
ein Schneidwerk (36), das mit dem Rahmen (24) gekoppelt ist und eine Schneide (48) enthält, die betreibbar ist, Erntegutmaterial zu schneiden, während sich der Rahmen (24) über die Bodenoberfläche bewegt;
einen Bildsensor (50), der mit dem Rahmen (24) gekoppelt ist und derart angeordnet ist, dass er während des Betriebs ein Bild des geschnittenen Ernteguts in Bezug auf die Fahrtrichtung (28) hinter dem Schneidwerk (36) aufnimmt;
eine Schneidendiagnose-Steuereinheit (52), die einen Prozessor (56) und einen Speicher (58), in dem ein Diagnosealgorithmus (60) gespeichert ist, enthält, wobei der Prozessor (56) konfiguriert ist, den Diagnosealgorithmus (60) auszuführen zum:
Aufnehmen eines Bildes des geschnittenen Ernteguts hinter dem Schneidwerk (36) mit dem Bildsensor (50), während sich der Rahmen (24) über die Bodenoberfläche bewegt;
Identifizieren des geschnittenen Endes (64, 66) des geschnittenen Ernteguts im Bild über Musterabgleich und Erkennung unter Verwendung eines neuronalen Faltungsnetzes (62), wobei das neuronale Faltungsnetz (62) konfiguriert ist, das geschnittene Ende (64, 66) des geschnittenen Ernteguts entweder als ein scharf geschnittenes Ende (64) oder ein stumpf geschnittenes Ende (66) zu klassifizieren;
Bestimmen einer Schnittqualität des geschnittenen Endes (64, 66) des geschnittenen Ernteguts;
Berechnen einer Häufigkeit der stumpf geschnittenen Enden (66) des geschnittenen Ernteguts;
Bestimmen der Schnittqualität auf der Grundlage der Häufigkeit der stumpf geschnittenen Enden (66) des geschnittenen Ernteguts; Korrelieren der Schnittqualität des geschnittenen Endes (64, 66) mit einem Schneidenschärfeindex; und
Kommunizieren eines Indexsignals an eine Kommunikationseinrichtung (54), wobei das Indexsignal die Kommunikationseinrichtung (54) steuert, eine Kommunikation zu erzeugen, die den Schneidenschärfeindex angibt.

2. Mähwerkzeug (20) nach Anspruch 1, wobei der Prozessor (56) konfiguriert ist, den Diagnosealgorithmus (60) auszuführen, um automatisch ein Wartungsanforderungssignal an die Kommunikationseinrichtung (54) zu kommunizieren, wenn der Schneidenschärfeindex unter einem Schärfeschwellenwert liegt, wobei das Wartungsanforderungssignal die Kommunikationseinrichtung (54) steuert, eine Kommunikation zu erzeugen, die eine Wartung der Schneide (48) anfordert.

3. Mähwerkzeug (20) nach Anspruch 1 oder 2, wobei der Prozessor (56) konfiguriert ist, den Diagnosealgorithmus (60) auszuführen, um auf der Grundlage des Schneidenschärfeindex eine Restlebensdauer der Schneide (48) zu schätzen.

4. Mähwerkzeug (20) nach mindestens einem der vorhergehenden Ansprüche, wobei der Prozessor (56) konfiguriert ist, den Diagnosealgorithmus (60) auszuführen, um ein Lebenserwartungssignal an die Kommunikationseinrichtung (54) zu kommunizieren, wobei das Lebenserwartungssignal die Kommunikationseinrichtung (54) steuert, eine Kommunikation zu erzeugen, die die Restlebensdauer der Schneide (48) angibt.

5. Mähwerkzeug (20) nach mindestens einem der vorhergehenden Ansprüche, wobei der Prozessor (56) konfiguriert ist, den Diagnosealgorithmus (60) auszuführen, um die Schnittqualität des geschnittenen Endes (64, 66) des geschnittenen Ernteguts durch Messen einer Lichtbeugung vom geschnittenen Ende (64, 66) des geschnittenen Ernteguts zu bestimmen, wobei eine Lichtbeugung vom geschnittenen Ende (64, 66) über einem Beugungsschwellenwert als ein stumpf geschnittenes Ende (66) klassifiziert wird und eine Lichtbeugung vom geschnittenen Ende (64, 66) unter dem Beugungsschwellenwert als ein scharf geschnittenes Ende (64) klassifiziert wird.

6. Verfahren zum Überwachen einer Schneide (48) eines Mähwerkzeugs (20), wobei das Verfahren Folgendes umfasst:
Aufnehmen eines Bildes von geschnittenen Erntegutstoppeln hinter dem Schneidwerk (36) mit einem Bildsensor (50), der am Mähwerkzeug (20) angebracht ist, während sich das Mähwerk (20) über eine Bodenoberfläche bewegt;
Identifizieren eines geschnittenen Endes (64, 66) der geschnittenen Erntegutstoppeln im Bild mit einer Schneidendiagnose-Steuereinheit (52) unter Verwendung eines neuronalen Faltungsnetzes (62), wobei das neuronale Faltungsnetz (62) das geschnittene Ende (64, 66) des geschnittenen Ernteguts entweder als ein scharf geschnittenes Ende (64) oder ein stumpf geschnittenes Ende (66) klassifiziert;
Bestimmen einer Schnittqualität des geschnittenen Endes (64, 66) der geschnittenen Erntegutstoppeln mit der Schneidendiagnose-Steuereinheit (52) unter Verwendung des neuronalen Faltungsnetzes (62);
Berechnen einer Häufigkeit der stumpf geschnittenen Enden (66) des geschnittenen Ernteguts;
Bestimmen der Schnittqualität auf der Grundlage der Häufigkeit der stumpf geschnittenen Enden (66) des geschnittenen Ernteguts;
Korrelieren der Schnittqualität des geschnittenen Endes (64, 66) mit einem Schneidenschärfeindex mit der Schneidendiagnose-Steuereinheit (52); und
Kommunizieren eines Indexsignals an eine Kommunikationseinrichtung (54), wobei das Indexsignal die Kommunikationseinrichtung (54) steuert, eine Kommunikation zu erzeugen, die den Schneidenschärfeindex angibt.

7. Verfahren nach Anspruch 6, das ferner das Kommunizieren eines Wartungsanforderungssignals an die Kommunikationseinrichtung (54), wenn der Schneidenschärfeindex unter einem Schärfeschwellenwert liegt, umfasst, wobei das Wartungsanforderungssignal die Kommunikationseinrichtung (54) steuert, eine Kommunikation zu erzeugen, die eine Wartung der Schneide (48) anfordert.

8. Verfahren nach Anspruch 6 oder 7, das ferner das Schätzen einer Restlebensdauer der Schneide (48) auf der Grundlage des Schneidenschärfeindex und das Kommunizieren eines Lebenserwartungssignals an die Kommunikationseinrichtung (54) umfasst, wobei das Lebenserwartungssignal die Kommunikationseinrichtung (54) steuert, eine Kommunikation zu erzeugen, die die Restlebensdauer der Schneide (48) angibt.

## Revendications

1. Outil de tondeuse (20) comprenant :
un châssis (24) mobile sur une surface de sol dans une direction de déplacement (28) pendant le fonctionnement ;
un outil de coupe (36) couplé au châssis (24) et comprenant une lame (48) capable de couper un produit de récolte lorsque le châssis (24) se déplace sur la surface du sol ;
un capteur d'image (50) couplé au châssis (24) et positionné de manière à capturer une image de la récolte coupée à l'arrière de l'outil de coupe (36) relativement à la direction de déplacement (28) pendant le fonctionnement ;
un contrôleur de diagnostic de lame (52) incluant un processeur (56) et une mémoire (58) dans laquelle est stocké un algorithme de diagnostic (60), le processeur (56) étant configuré pour exécuter l'algorithme de diagnostic (60) pour :
capturer une image de la récolte coupée à l'arrière de l'outil de coupe (36) au moyen du capteur d'image (50) au fur et à mesure que le châssis (24) se déplace sur la surface de sol ;
identifier la fin de coupe (64, 66) de la récolte coupée sur l'image par mise en correspondance et reconnaissance de motifs à l'aide d'un réseau neuronal convolutif (62), le réseau neuronal convolutif (62) étant configuré pour classifier la fin de coupe (64, 66) de la récolte coupée en tant que fin de coupe nette (64) ou fin de coupe imprécise (66) ;
déterminer une qualité de coupe de la fin de coupe (64, 66) de la récolte coupée ;
calculer une fréquence de fins de coupe imprécises (66) de la récolte coupée ;
déterminer la qualité de coupe en fonction de la fréquence des fins de coupe imprécises (66) de la récolte coupée ; corréler la qualité de coupe des fins de coupe (64, 66) à un indice d'affûtage de la lame ; et
communiquer un signal d'indice à un appareil de communication (54), le signal d'indice commandant l'appareil de communication (54) pour générer une communication indiquant l'indice d'affûtage de la lame.

2. Outil de fauche (20) selon la revendication 1, dans lequel le processeur (56) est configuré pour exécuter l'algorithme de diagnostic (60) afin de communiquer automatiquement un signal de demande d'entretien à l'appareil de communication (54) lorsque l'indice d'affûtage de la lame est inférieur à un seuil d'affûtage, le signal de demande d'entretien commandant l'appareil de communication (54) pour générer une communication demandant un entretien de la lame (48).

3. Outil de fauche (20) selon la revendication 1 ou 2, dans lequel le processeur (56) est configuré pour exécuter l'algorithme de diagnostic (60) pour estimer une durée de vie restante de la lame (48) sur la base de l'indice d'affûtage de la lame.

4. Outil de fauche (20) selon au moins l'une des revendications précédentes, dans lequel le processeur (56) est configuré pour exécuter l'algorithme de diagnostic (60) pour communiquer un signal d'espérance de vie à l'appareil de communication (54), dans lequel le signal d'espérance de vie commande l'appareil de communication (54) pour générer une communication indiquant la durée de vie restante de la lame (48).

5. Outil de fauche (20) selon au moins l'une des revendications précédentes, dans lequel le processeur (56) est configuré pour exécuter l'algorithme de diagnostic (60) pour déterminer la qualité de coupe de la fin de coupe (64, 66) de la récolte de coupe en mesurant la diffraction de la lumière par la fin de coupe (64, 66) de la récolte coupée, une diffraction de la lumière par la fin de coupe (64, 66) supérieure à un seuil de diffraction étant classifiée comme une fin de coupe imprécise (66) et une diffraction de la lumière par la fin de coupe (64, 66) inférieure à un seuil de diffraction étant classifiée comme une fin de coupe nette (64).

6. Procédé de surveillance de lame (48) d'un outil de fauche (20), le procédé comprenant :
la capture d'une image des chaumes coupés à l'arrière de l'outil de coupe (36) au moyen d'un capteur d'image (50) monté sur l'outil de fauche (20) lorsque l'outil de fauche (20) se déplace sur une surface de sol ;
l'identification de la fin de coupe (64, 66) des chaumes coupés sur l'image, au moyen d'un contrôleur de diagnostic de lame (52) à l'aide d'un réseau neuronal convolutif (62), le réseau neuronal convolutif (62) classifiant la fin de coupe (64, 66) de la récolte coupée en tant que fin de coupe nette (64) ou fin de coupe imprécise (66) ;
la détermination d'une qualité de coupe de la fin de coupe (64, 66) des chaumes coupés au moyen du contrôleur de diagnostic de lame (52) à l'aide du réseau neuronal convolutif (62) ;
le calcul d'une fréquence de fins de coupe imprécises (66) de la récolte coupée ;
la détermination de la qualité de coupe sur la base de la fréquence des fins de coupe imprécises (66) de la récolte coupée ;
la corrélation de la qualité de coupe de la fin de coupe (64, 66) à un indice d'affûtage de la lame au moyen du contrôleur de diagnostic de lame (52) ; et
la communication d'un signal d'indice à un appareil de communication (54), le signal d'indice commandant l'appareil de communication (54) pour générer une communication indiquant l'indice d'affûtage de la lame.

7. Procédé selon la revendication 6, comprenant en outre la communication d'un signal de demande d'entretien à l'appareil de communication (54) lorsque l'indice d'affûtage de la lame est inférieur à un seuil d'affûtage, le signal de demande d'entretien commandant l'appareil de communication (54) pour générer une communication demandant un entretien de la lame (48).

8. Procédé selon la revendication 6 ou 7, comprenant en outre l'estimation d'une durée de vie restante de la lame (48) sur la base de l'indice d'affûtage de la lame et la communication d'un signal d'espérance de vie à l'appareil de communication (54), dans lequel le signal d'espérance de vie commande l'appareil de communication (54) pour générer une communication indiquant la durée de vie restante de la lame (48).
